# EUROPEAN PATENT SPECIFICATION

(11) **EP 1 474 980 B1**
(45) Date of publication and mention of the grant of the patent: **28.02.2007**
(21) Application number: 03258139.9
(22) Date of filing: 22.12.2003
(51) Int. Cl.: A21B 7/00

(54) **Bread maker**
Brotbackmaschine
Machine de fabrication de pain

(30) Priority: 07.05.2003 KR 2003029089
(43) Date of publication of application: 10.11.2004
(73) Proprietor: SAMSUNG ELECTRONICS CO. LTD., Kyungki-do (KR)
(72) Inventor: Sung, Han-jun, Suwon City Kyungki-do (KR); Kwon, Yong-hyun, Suwon city Kyungki-do (KR); Kim, Chul, Anyang city Kyungki-do (KR); Lee, Tae-uk, Suwon city Kyungki-do (KR); Park, Jae-ryong, Suwon city Kyungki-do (KR); Lee, Jang-woo, Suwon city Kyungki-do (KR); Lim, Dong-bin, Suwon city Kyungki-do (KR)
(74) Representative: Brandon, Paul Laurence

(56) References cited:
- US-A- 5 947 009

## Description

The present invention relates to bread makers, and more particularly, though not exclusively to bread makers in which dough in a mixing bag can be uniformly kneaded during a kneading process.

Generally, bread is made by using a bread maker which automatically performs multiple steps such as kneading, leavening and baking of raw materials for bread.

For example, the bread maker disclosed in Korean Patent Publication No.2001-0032188 includes a housing forming an external appearance of a bread maker; a door provided in the housing; and an LCD display part provided in a front side of housing.

A similar bread maker is disclosed in US-A-5,947,009.

Upper and lower rollers are rotatably disposed in parallel in the upper and lower parts of the housing to wind opposite ends of a mixing bag. A pair of upper members are placed between the upper and lower rollers to prevent the raw materials kneaded in the mixing bag from being moved to the upper roller.

A baking tray is provided between the pair of upper members and the lower roller which can be slid out of the oven compartment and contains kneaded materials therein.

The baking tray is box-shaped having a top opening by combining a stationary part and a movable part symmetrical to each other. A slit is formed along the line where the movable part meets the stationary part and extends from a sidewall to the bottom, wherein pivot means of the movable part is combined with pivot holders.

The raw materials contained in the mixing bag are reciprocated up and down by the upper and lower rollers during a kneading process, thereby being kneaded between the pair of upper members and the baking tray. After completing the kneading process, the mixing bag is removed and dough contained in the baking tray is baked.

In a conventional bread maker, the mixing bag is reciprocated up and down through the slit of the baking tray during a kneading process. When the mixing bag moves up, the pair of upper members prevents the dough in the mixing bag from being moved up toward the upper roller. When the mixing bag moves down, the dough in the mixing bag cannot pass through the narrow slit of the baking tray, so that the dough can be repetitively kneaded. Thus, it is essential to keep the width of the slit constant in spite of repetitive usage. Hence, to obtain well-kneaded uniform dough from materials in the mixing bag, a means for adjusting the width of the slit may be required so as to keep the width of the slit constant.

Accordingly, it is an aim of preferred embodiments of the present invention to provide a bread maker in which dough in a mixing bag can be uniformly kneaded during the kneading process.

According to the present invention there is provided a bread maker comprising a main body forming an oven compartment; an upper kneading drum and a lower kneading drum which are spaced apart from each other in an upper part and a lower part of the oven compartment and hold opposite ends of a mixing bag, respectively; a baking tray having a stationary tray member and a movable tray member which are disposed between the upper and lower kneading drums facing each other and forming a slit to pass the mixing bag through, wherein the movable tray member is formed with combining projections on opposite sidewalls thereof; and a pair of tray holder members which supports the stationary tray member and is formed with guide grooves to accommodate the combining projections for movably supporting the movable tray member, the movable tray member being combined with opposite ends of the pair of tray holder members, wherein a plurality of combining projections and guide grooves is provided, and a screw hole is formed at one end of each of the tray holder members, each screw hole communicating with a guide groove, and an adjusting member moving the movable tray member is connected with the screw hole .

Suitably, each of the tray holder members is formed with a first guide groove, a second guide groove and a screw hole which is communicating with the second guide groove toward the transverse direction of the slit.

Suitably, the bread maker further comprises a pair of dough profile parts which is projected facing each other in the slit and contacting the mixing bag.

Suitably, the adjusting member is an adjusting bolt screw-engaged with the screw hole of the tray holder member.

Further features of the present invention are set out in the appended claims.

The present invention will become apparent and more readily appreciated from the following description of an embodiment, by way of example only, taken in conjunction with the accompanying drawings of which:
FIG. 1 is a perspective view illustrating a baking tray assembly of a bread maker of the present invention;
FIG. 2 is a combined perspective view of the baking tray assembly of FIG. 1;
FIG. 3 is an exploded perspective view of the baking tray assembly of FIG. 2;
FIGS. 4 and 5 are sectional views illustrating how a movable tray member moves to adjust the width of the slit, taken along line IV-IV in FIG. 2.

Reference will now be made in detail to an embodiment of the present invention, an example of which is illustrated in the accompanying drawings, wherein like reference numerals refer to like elements throughout. The embodiment is described below in order to explain the present invention by referring to the figures.

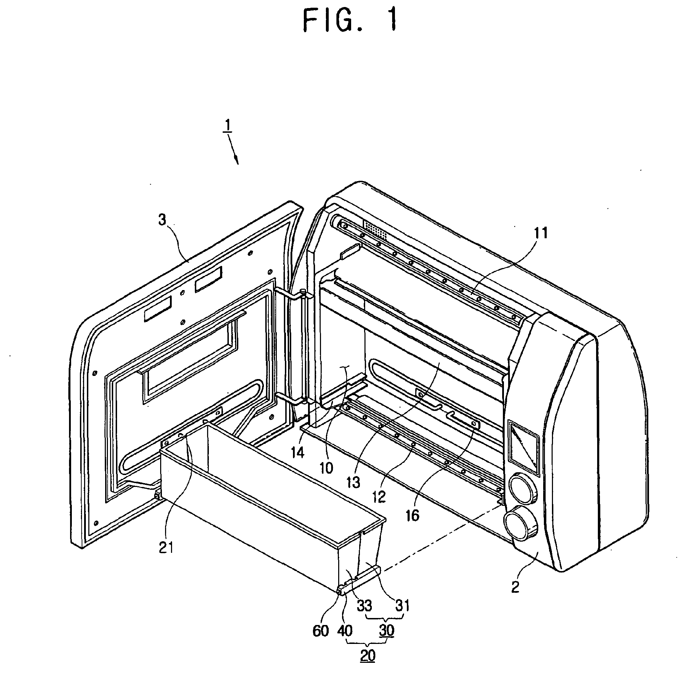

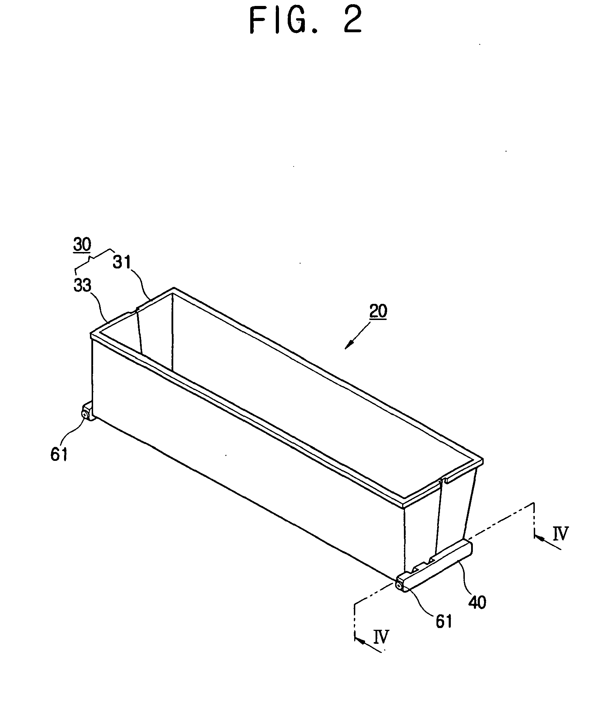

In FIGS. 1-3, a bread maker according to a preferred embodiment of the present invention comprises: a main body 1 provided with an oven compartment 10; a door 3 to rotatably open and close a front opening of the oven compartment 10; and an operation display panel to show an operation state of the main body 1.

Upper and lower kneading drums 11 and 12 rotatably disposed in the upper and lower parts of the oven compartment 10 are placed in parallel to wind opposite ends of a mixing bag (not shown) filled with raw materials for bread in clockwise and counterclockwise directions. A pair of dough-blocking members 13 are placed between the upper and lower kneading drums 11 and 12 to prevent the raw materials kneaded in the mixing bag from being moved to the upper kneading drum 11.

A baking tray assembly 20 is provided between the upper and lower kneading drums 11 and 12 in the lower part of the oven compartment 10. The baking tray assembly 20 may be slid out from the oven compartment 10 and contains kneaded materials for bread therein.

The baking tray assembly 20 comprises a baking tray 30 having stationary and movable tray members 31 and 33 respectively, both of L-shaped sections symmetrical to each other; and a pair of tray holder members 40 connected with opposite ends of the stationary and movable tray members 31 and 33, respectively.

Stationary projections 32 securely combined with the pair of tray holder members 40 are projected from the lower surface of the opposite sidewalls of the stationary tray member 31. Combining projections 34 movably combined with the pair of tray holder members 40 are projected from the lower surface of the opposite sidewalls of the movable tray member 33.

The pair of tray holder members 40 is slidingly combined with guide members 14 which are mounted on opposite inner sidewalls of the oven compartment 10. The stationary projections 32 of the stationary tray member 31 are inserted into the stationary projections accommodating parts 41 which are grooved into the tray holder member 40. The combining projections 34 of the movable tray member 33 are movably inserted into guide grooves 42 formed in the tray holder member 40.

The guide grooves 42 form a pair provided in each of the tray holder members 40 and comprise a first guide groove 42a positioned adjacent to the stationary tray member 31 and a second guide groove 42b positioned adjacent to the first guide groove 42a.

When the stationary projections 32 of the stationary tray member 31 are inserted in the stationary projections accommodating parts 41 of the tray holder member 40, the stationary tray member 31 is securely mounted on the tray holder member 40. Similarly, when the combining projections 34 of the pivotably movable tray member 33 are movably inserted in the guide grooves 42 of the tray holder member 40, the movable tray member 33 is movably mounted on the tray holder member 40.

When the stationary and movable tray members 31 and 33 are mounted on the tray holder member 40 facing each other, the baking tray 30 of a box shape having a top opening for containing the raw materials for bread is formed. A slit 21 is formed along the line where the stationary and movable tray members 31 and 33 are met. A pair of dough profile parts 50 are provided in the slit 21. The dough profile parts are projected facing each other and contacting each other when the mixing bag is introduced through the slit 21.

The bread maker further comprises an adjusting means which adjusts the width of the slit 21 so as to keep the width constant when the mixing bag is reciprocated up and down through the slit 21.

The adjusting means comprises a screw hole 60 formed at the front end of the tray holder member 40 along the transverse direction of the slit 21 and communicated with the second guide groove 42b; and an adjusting bolt 61 as an adjusting member which is screw-engaged with the screw hole 60 and moves the movable tray member 33 toward the transverse direction of the slit 21, so that the width of the slit 21 can be adjusted.

When the adjusting bolt 61 screw-engaged with the screw hole 60 is rotated for adjusting the width of the slit, the threaded part of the adjusting bolt 61 is moved forward into the second guide groove 42b towards the transverse direction of the slit 21. Then, the combining projection 34 in the second guide groove 42b is moved forward towards the transverse direction of the slit 21 because when the adjusting bolt 61 moves forward, it pushes the combining projection 34 forward. Accordingly, the movable tray member 33 formed with the combining projection 34 is moved slightly forward, so that the width of the slit 21 between the stationary and movable tray members 31 and 33 can be adjusted.

One end of the mixing bag contained inside of the oven compartment 10 is wound by the upper kneading drum 11.

Then, the other end of the mixing bag passes through the pair of dough-blocking members 13 and the slit 21 formed at the bottom of the baking tray 30 and then the mixing bag is wound by the lower kneading drum 12. The mixing bag filled with the raw materials for bread is reciprocated up and down by the upper and lower kneading drums 11 and 12 during a kneading process, so that the raw materials for bread are kneaded between the pair of dough-blocking members 13 and the baking tray 30. After completing the kneading process, the mixing bag is released from the upper kneading drum 11 because only the lower kneading drum 12 is rotated. Then, the mixing bag passes through the pair of dough-blocking members 13 and finally the slit 21 formed at the bottom of the baking tray 30. When the mixing bag passes through the slit 21 of the baking tray 30, the kneaded dough contained in the mixing bag cannot pass the slit 21 of the baking tray 30, therefore, the kneaded dough is separated from the mixing bag and contained in the baking tray 30. However, the mixing bag can pass through the slit 21 of the baking tray 30 and is wound by the lower kneading drum 12. Thereafter, the kneaded dough contained in the baking tray 30 is baked by the baking heater 16.

In the bread maker of this embodiment of the present invention, the width of the slit 21 can be adjusted by the adjusting bolt 61, which make the raw materials contained in the mixing bag uniformly kneaded between the pair of dough-blocking members 13 and the baking tray 30.

When the width of the slit 21 is broader or narrower than the predetermined width which should be kept during the kneading process, the width of the slit 21 can be adjusted by rotating each of the adjusting bolts 61 combined with the pair of tray holder members 40.

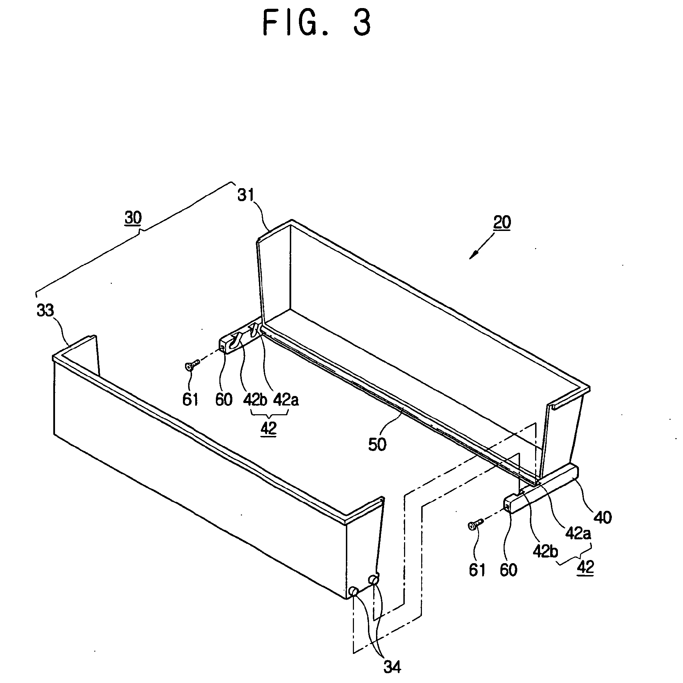

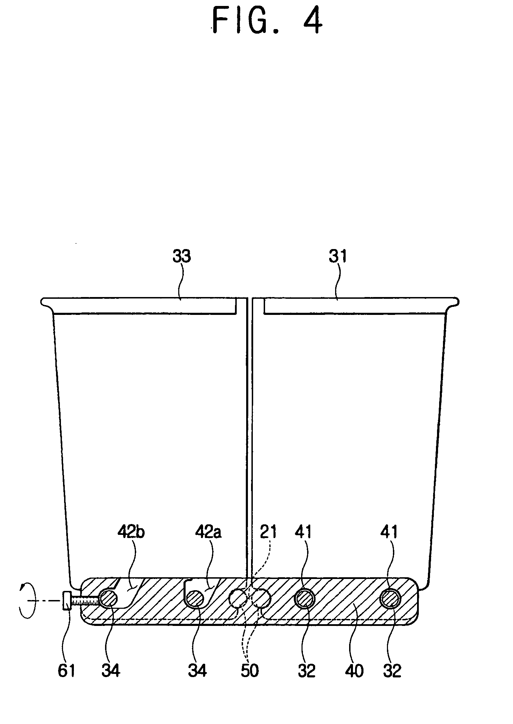

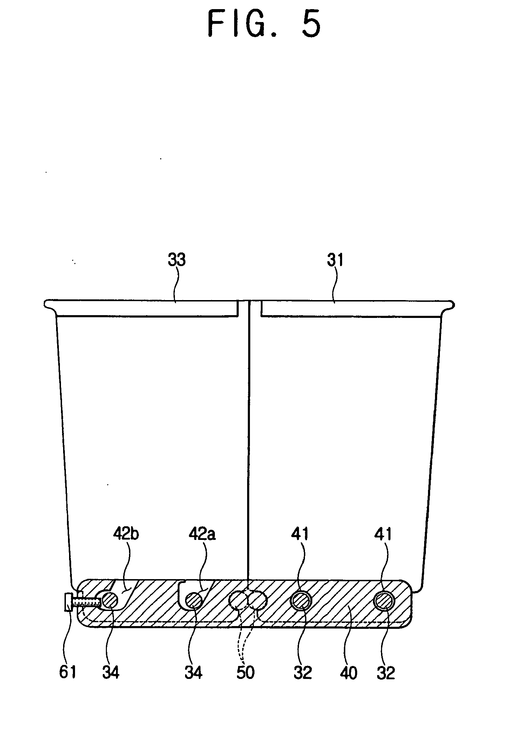

As shown in FIGS. 3-5, the bread maker further comprises an adjusting means having a screw hole 60 and an adjusting bolt 61. When the adjusting bolt 61 screw-engaged with the screw hole 60 is rotated for adjusting the width of the slit 21, the threaded part of the adjusting bolt 61 is moved forward into the second guide groove 42b towards the transverse direction of the slit 21. Then, also the combining projection 34 in the second guide groove 42b is moved forward towards the transverse direction of the slit 21 because when the adjusting bolt 61 moves forward, it pushes the combining projection 34 forward. Accordingly, the movable tray member 33 formed with the combining projection 34 is moved slightly forward, so that the width of the slit 21 between the stationary and movable tray members 31 and 33 becomes narrower. In contrast, when the adjusting bolt 61 is rotated in the reverse direction, the adjusting bolt 61 contacting the combining projection 34 in the second guide groove 42b is moved backward. Thus, the movable tray member 33 is moved backward apart from the stationary tray member 31, so that the width of the slit becomes broader. The width of the slit 21 may be adjusted so as to keep the width of the slit 21 constant, which is required for the uniform kneading of the dough in the mixing bag.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A bread maker comprising:
a main body (1) forming an oven compartment (10);
an upper kneading drum (11) and a lower kneading drum (12) which are spaced apart from each other in an upper part and a lower part of the oven compartment (10) and hold opposite ends of a mixing bag, respectively;
a baking tray (30) having a stationary tray member (31) and a movable tray member (33) which are disposed between the upper (11) and lower (12) kneading drums facing each other and forming a slit (21) to pass the mixing bag through, wherein the movable tray member (33) is formed with combining projections (34) on opposite sidewalls thereof; and
a pair of tray holder members (40) which supports the stationary tray member (31) and which tray holder members are formed with guide grooves (42) to accommodate the combining projections for movably supporting the movable tray member (33), the movable tray member (33) being combined with opposite ends of the pair of tray holder members (40), **characterized in that** a plurality of the combining projections (34) and the guide grooves (42) is provided, and that
a screw hole (60) is formed at one end of each of the tray holder members (40), each screwhole communicating with a guide groove, and that an adjusting member (61) moving the movable tray member (33) is connected with the screw hole (60).

2. The bread maker of claim 1, wherein each of the tray holder members (40) is formed with a first guide groove (42a) positioned adjacent to the stationary tray member (31) and a second guide groove (42b) positioned adjacent to the first guide groove (42a) and the screw hole (60) is communicating with the second guide groove (42b) towards the transverse direction of the slit (21).

3. The bread maker of claim 2, further comprising:
a pair of dough profile parts (50) facing each other in the slit (21) and contacting the mixing bag.

4. The bread maker of any preceding claim, wherein the adjusting member (61) is an adjusting bolt (61) screw-engaged with the screw hole (60).

5. The bread maker of any preceding claim, wherein the stationary tray member (31) and the movable tray member (33) are L-shaped sections symmetrical to each other.

6. The bread maker of claim 2, wherein each of the tray holder members (40) are slidingly combined with a plurality of guide members (14) which are mounted on the inner side walls of the oven compartment (10).

7. The bread maker of any preceding claim, wherein the stationary tray member (31) comprises:
a plurality of stationary projections (32) projecting from a lower surface of the opposite sidewalls of the stationary tray member, the plurality of stationary projections being securely combined with the pair of tray holder members.

8. The bread maker of claim 7, wherein the plurality of stationary projections (32) are inserted into a plurality of stationary projections accommodating parts (41) of the pair of tray holder members (40).

## Patentansprüche

1. Brotbackmaschine, die umfasst:
einen Hauptkörper (1), der eine Ofenkammer (10) bildet;
eine obere Knetwalze (11) und eine untere Knetwalze (12), die voneinander in einem oberen und einem unteren Teil der Ofenkammer (10) beabstandet sind und jeweils einander gegenüberliegende Enden eines Mischbeutels halten;
eine Backschale (30), die ein stationäres Schalenelement (31) und ein bewegliches Schalenelement (33) aufweist, die zwischen der oberen (11) und der unteren (12) Knetwalze einander zugewandt angeordnet sind und einen Schlitz (21) bilden, um den Mischbeutel hindurch zu leiten, wobei das bewegliche Schalenelement (33) mit Verbindungsvorsprüngen (34) an einander gegenüberliegenden Seitenwänden desselben versehen ist; und
ein Paar Schalen-Halteelemente (40), die das stationäre Schalenelement (31) tragen, wobei die Schalen-Halteelemente mit Führungsnuten (42) zum Aufnehmen der Verbindungsvorsprünge versehen sind, um das bewegliche Schalenelement (33) beweglich zu tragen, und das bewegliche Schalenelement mit einander gegenüberliegenden Enden des Paars Schalenhalteeiemente (40) verbunden ist, **dadurch gekennzeichnet, dass** eine Vielzahl der Verbindungsvorsprünge (34) und der Führungsnuten (42) vorhanden ist und dass ein Schraubenloch (60) an einem Ende jedes der Schalen-Halteelemente (40) ausgebildet ist, wobei jedes Schraubenloch mit einer Führungsnut in Verbindung steht, und dass ein Einstellelement (61), das das bewegliche Schalenelement (33) bewegt, mit dem Schraubenloch (60) verbunden ist.

2. Brotbackmaschine nach Anspruch 1, wobei jedes der Schalen-Halteelemente (40) mit einer ersten Führungsnut (42a), die an das stationäre Schalenelement (31) angrenzend angeordnet ist, und einer zweiten Führungsnut (42b) versehen ist, die an die erste Führungsnut (42a) angrenzend angeordnet ist, und das Schraubenloch (60) mit der zweiten Führungsnut (42b) auf die Querrichtung des Schlitzes (21) zu In Verbindung steht.

3. Brotbackmaschine nach Anspruch 2, die des Weiteren umfasst:
ein Paar Teig-Profilteile (50), die einander in dem Schlitz (21) zugewandt sind und mit dem Mischbeutel in Kontakt sind.

4. Brotbackmaschine nach einem der vorangehenden Ansprüche, wobei das Einstellelement (61) ein Einstellbolzen (61) ist, der in das Schraubenloch (60) eingeschraubt ist.

5. Brotbackmaschine nach einem der vorangehenden Ansprüche, wobei das stationäre Schalenelement (31) und das bewegliche Schalenelement (33) L-förmige Profile sind, die symmetrisch zueinander sind.

6. Brotbackmaschine nach Anspruch 2, wobei jedes der Schalen-Halteelemente (40) verschiebbar mit einer Vielzahl von Führungselementen (14) verbunden ist, die an den inneren Seitenwänden der Ofenkammer (10) angebracht sind.

7. Brotbackmaschine nach einem der vorangehenden Ansprüche, wobei das stationäre Schalenelement (31) umfasst:
eine Vielzahl stationärer Vorsprünge (32), die von einer unteren Fläche der einander gegenüberliegenden Seitenwände des stationären Schalenelementes vorstehen, wobei die Vielzahl stationärer Vorsprünge fest mit dem Paar Schalen-Halteelemente verbunden ist.

8. Brotbackmaschine nach Anspruch 7, wobei die Vielzahl stationärer Vorsprünge (32) in eine Vielzahl von Teilen (41) des Paars von Schalen-Hafteelementen (40) zum Aufnehmen stationärer Vorsprünge eingeführt sind.

## Revendications

1. Machine de fabrication de pain comprenant :
un corps principal (1) formant un compartiment de four (10);
un tambour de pétrissage supérieur (11) et un tambour de pétrissage inférieur (12) qui sont espacés l'un de l'autre dans une partie supérieure et une partie inférieure du compartiment de four (10) et retiennent des extrémités opposées d'un sac de mélange, respectivement ;
un plateau de cuisson (30) possédant un élément de plateau fixe (31) et un élément de plateau amovible (33) qui sont disposés entre les tambours de pétrissage supérieur (11) et inférieur (12) se faisant face et formant une fente (21) pour faire passer le sac de mélange à travers, dans laquelle l'élément de plateau amovible (33) comporte des saillies de montage (34) sur ses parois latérales opposées ; et
une paire d'éléments de support de plateau (40) qui supporte l'élément de plateau fixe (31), lesquels éléments de support de plateau comportent des rainures de guidage (42) pour recevoir les saillies de montage pour supporter l'élément de plateau amovible (33) de façon mobile, l'élément de plateau amovible (33) étant monté sur à des extrémités opposées de la paire d'éléments de support de plateau (40), **caractérisée en ce qu'**une pluralité des saillies de montage (34) et des rainures de guidage (42) est prévue, et qu'un trou de vis (60) est formé au niveau d'une extrémité de chacun des éléments de support de plateau (40), chaque trou de vis communiquant avec une rainure de guidage, et qu'un élément de réglage (61) déplaçant l'élément de plateau amovible (33) est relié au trou de vis (60).

2. Machine de fabrication de pain selon la revendication 1, dans laquelle chacun des éléments de support de plateau (40) comporte avec une première rainure de guidage (42a) positionnée à côté de l'élément de plateau fixe (31) et une seconde rainure de guidage (42b) positionnée à côté de la première rainure de guidage (42a) et le trou de vis (60) communique avec la seconde rainure de guidage (42b) dans une direction transversale à la fente (21).

3. Machine de fabrication de pain selon la revendication 2, comprenant en outre une paire de parties de profil de pâte (50) se faisant face dans la fente (21) et entrant en contact avec le sac de mélange.

4. Machine de fabrication de pain selon l'une quelconque des revendications précédentes, dans laquelle l'élément de réglage (61) est un boulon de réglage (61) en prise vissée avec le trou de vis (60).

5. Machine de fabrication de pain selon l'une quelconque des revendications précédentes, dans laquelle l'élément de plateau fixe (31) et l'élément de plateau amovible (33) sont des sections en forme de L symétriques l'une par rapport à l'autre.

6. Machine de fabrication de pain selon la revendication 2, dans laquelle chacun des éléments de support de plateau (40) est associé de façon coulissante à une pluralité d'éléments de guidage (14) qui sont montés sur les parois latérales intérieures du compartiment de four (10).

7. Machine de fabrication de pain selon l'une quelconque des revendications précédentes, dans laquelle l'élément de plateau fixe (31) comprend
une pluralité de saillies fixes (32) en relief sur une surface inférieure des parois latérales opposées de l'élément de plateau fixe, la pluralité de saillies fixes étant montées de façon coulissante sur la paire d'éléments de support de plateau.

8. Machine de fabrication de pain selon la revendication 7, dans laquelle la pluralité de saillies fixes (32) est insérée dans une pluralité de parties de logement (41) de saillies fixes de la paire d'éléments de support de plateau (40).
